# DEMANDE DE BREVET EUROPEEN

(11) **EP 4 406 772 A1**
(43) Date de publication de la demande: **31.07.2024**
(21) Numéro de dépôt: 24153911.3
(22) Date de dépôt: 25.01.2024
(51) Int. Cl.: B60L 50/53, B60L 7/12

(54) **VÉHICULE FERROVIAIRE À STOCKAGE D ÉNERGIE ÉLECTRIQUE**

(30) Priorité: 26.01.2023 FR 2300744
(71) Demandeur: ALSTOM Holdings, 93400 Saint-Ouen-sur-Seine (FR)
(72) Inventeur: SADOUN, Jérôme, François, 1325 CORROY-LE-GRAND (BE); VIENNE, Mathieu, Alain, Marie, 17000 LA ROCHELLE (FR); BELLOMO, Jean-Philippe, Roger, Fernand, 65000 TARBES (FR); GABRIEL, Guillaume, Maurice, Roger, 95230 SOISY-SOUS-MONTMORENCY (FR)
(74) Mandataire: Lavoix

(57) **Abrégé**

Le véhicule ferroviaire comporte :
- un hacheur (50A, 50B) connectable à un réseau d'alimentation électrique,
- une batterie (22) reliée au hacheur (50A, 50B) au travers d'un bus de courant (54A, 54B),
- une chaîne de traction (20) comportant :
- un convertisseur de traction (52A, 52B) relié au réseau,
- un moteur électrique (12A, 12B) relié en sortie du convertisseur de traction (52A, 52B), et
- une unité de commande (56) du hacheur (50A, 50B) et du convertisseur de traction (52A, 52B).
Le convertisseur de traction (52A, 52B) est connecté au bus de courant (54A, 54B) pour son alimentation au travers du hacheur (50A, 50B) depuis le réseau d'alimentation électrique et/ou depuis la batterie (22), et

- l'unité de commande (56) est propre à piloter le hacheur (50A, 50B) pour l'alimentation de la batterie (22) et l'alimentation du moteur électrique (12A, 12B) depuis le réseau.

## Description

La présente invention concerne un véhicule ferroviaire comportant :
- une connexion à un réseau d'alimentation électrique continu,
- un hacheur connectable depuis une entrée à la connexion au réseau d'alimentation électrique,
- une batterie de stockage d'énergie électrique reliée pour son rechargement à une sortie du hacheur au travers d'un bus de courant continu,
- une chaîne de traction comportant :
- un convertisseur de traction relié à la connexion au réseau d'alimentation électrique,
- un moteur électrique relié en sortie du convertisseur de traction pour son alimentation, et,
- une unité de commande du hacheur et du convertisseur de traction..

Les véhicules ferroviaires électriques et notamment les tramways sont alimentés depuis un réseau d'alimentation électrique extérieur par l'intermédiaire d'une caténaire ou d'un rail placé au sol, permettant l'alimentation du véhicule lors de sa circulation ou à l'arrêt.

Certains tronçons du réseau de circulation sont parfois dépourvus de moyen d'alimentation extérieure du véhicule pour des raisons d'esthétique ou de sécurité. Tel est le cas par exemple sur les tronçons traversant une place d'une ville.

Lors de la circulation sur un tronçon non-alimenté, l'alimentation des moteurs s'effectue depuis la batterie du véhicule.

Cette batterie doit être périodiquement rechargée à partir du réseau d'alimentation. À cet effet, un circuit de charge est prévu entre le réseau d'alimentation extérieur et la batterie. Ce circuit de charge intègre un hacheur placé entre la connexion au réseau d'alimentation électrique et la batterie.

Lorsque le moteur est alimenté depuis la batterie, en l'absence d'alimentation depuis la caténaire, l'énergie de la batterie transite au travers du hacheur avant d'alimenter le moteur au travers du convertisseur de traction.

Le transfert par le hacheur nuit au rendement global de l'installation et réduit la distance pouvant être parcourue avec la seule énergie stockée dans la batterie.

L'invention a pour but de proposer un véhicule ferroviaire dont l'efficacité énergétique est améliorée notamment lors des phases d'usage des moteurs alimentés depuis la batterie.

À cet effet, l'invention a pour objet un véhicule ferroviaire du type précité, caractérisé en ce que :
- le convertisseur de traction est connecté au bus de courant continu en sortie du hacheur pour son alimentation au travers du hacheur depuis la connexion au réseau d'alimentation électrique et/ou depuis la batterie de stockage d'énergie électrique, et
- l'unité de commande est propre à piloter le même hacheur pour l'alimentation de la batterie et l'alimentation du moteur électrique depuis la connexion au réseau d'alimentation électrique..

Suivant des modes de réalisation, le véhicule ferroviaire comporte l'une ou plusieurs des caractéristiques suivantes :
- l'unité de commande est propre à piloter le convertisseur de traction pour un échange d'énergie entre le moteur électrique et la batterie au travers du bus de courant continu ;
- un rhéostat relié à l'entrée du hacheur et l'unité de commande est propre à, lors des phases de freinage, piloter le hacheur pour débiter depuis son entrée, vers le rhéostat, le courant issu du convertisseur de traction sur le bus de courant continu si les conditions de charge maximale de la batterie sont atteints et les conditions d'injection sur le réseau d'alimentation électrique ne sont pas remplies ;
- deux chaînes de traction comportant chacune :
   - un hacheur connectable depuis une entrée à la connexion au réseau d'alimentation électrique,
   - un convertisseur de traction dont une entrée est reliée à une sortie du hacheur au travers d'un bus de courant continu,
   - un moteur électrique relié en sortie du convertisseur de traction pour son alimentation,
   - un rhéostat pour chaque chaîne de traction,
      et il comporte
      des moyens de connexion sélective des deux rhéostats en parallèle à l'entrée d'un unique et même hacheur d'une des chaînes de traction ou de chaque rhéostat seul sur une entrée d'un unique hacheur ;
   - des moyens de connexion sélective de la batterie :
      - au bus de courant continu du hacheur non connecté aux rhéostats lorsque les deux rhéostats sont connectés en parallèle à l'entrée d'un unique et même hacheur, et
      - aux bus de courant continu des deux hacheurs connectés aux rhéostats lorsque chaque rhéostat est connecté à une entrée d'un unique hacheur ;
   - l'unité de commande est propre à, lors des phases de traction :
      - piloter le convertisseur de traction pour l'alimentation du moteur électrique depuis le bus de courant continu,
      - piloter le hacheur pour répartir la fourniture d'énergie sur le bus de courant continu depuis la connexion au réseau d'alimentation électrique et depuis la batterie en fonction de critères de gestion d'énergie de traction prédéterminés ;
   - l'unité de commande est propre, lors des phases de traction, à piloter le hacheur pour fournir l'intensité nécessaire à l'alimentation du moteur sur le bus de courant continu prioritairement depuis la connexion au réseau d'alimentation électrique, jusqu'à une valeur d'intensité maximale de traction variable dépendant de l'état de charge de la batterie et complémentairement depuis la batterie, la valeur de l'intensité maximale de traction variable étant une fonction décroissante de l'état de charge de la batterie, nulle au-delà d'une valeur de charge maximale de la batterie ;
   - la fonction décroissante est constante pour les valeurs de charge de la batterie inférieure à une valeur de charge de référence puis strictement décroissante entre la valeur de charge de référence et la valeur de charge maximale ;
   - l'unité de commande est propre à, lors des phases de freinage :
      - piloter le convertisseur de traction pour débiter depuis son entrée sur le bus de courant continu l'énergie produite par le moteur de traction,
      - piloter le hacheur pour répartir l'énergie du bus de courant continu ers la connexion au réseau d'alimentation électrique et vers la batterie en fonction de critères de gestion d'énergie de freinage prédéterminés ;
   - l'unité de commande est propre, lors des phases de freinage, à piloter le hacheur pour fournir l'intensité débitée sur le bus de courant continu depuis l'entrée du convertisseur de traction prioritairement vers la connexion au réseau d'alimentation électrique jusqu'à une valeur d'intensité minimale de freinage variable dépendant de l'état de charge de la batterie, et complémentairement, vers la batterie, la valeur de l'intensité minimale de freinage étant une fonction décroissante de l'état de charge de la batterie, nulle en deçà d'une valeur de charge minimale ; et
   - la fonction décroissante est strictement décroissante jusqu'à une valeur de charge de référence et est constante pour les valeurs de charge supérieures à la valeur de charge de référence..

L'invention sera mieux comprise à la lecture de la description qui va suivre, donnée uniquement à titre d'exemple et faite en se référant aux dessins sur lesquels :
- [Fig 1] la figure 1 est une vue du schéma électrique du véhicule ferroviaire selon l'invention ; et
- [Fig 2] la figure 2 est un diagramme illustrant le mode de charge et de décharge de la batterie en fonction de son état de charge.

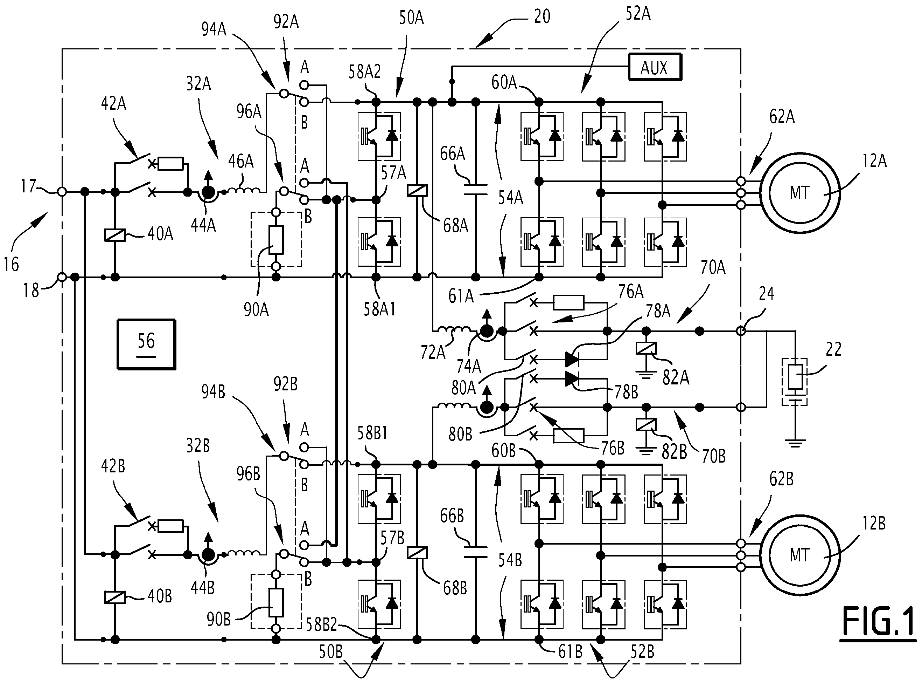

Le schéma électrique illustré sur la figure 1 montre les éléments principaux d'un véhicule ferroviaire tel qu'un tramway et plus précisément d'une voiture motrice de ce véhicule. Ainsi, si le véhicule forme une rame, seul le schéma électrique d'une voiture est représenté sur la figure 1.

Le véhicule comporte deux moteurs électriques 12A, 12B assurant chacun par exemple l'entrainement des roues d'un même bogie. Le véhicule comporte en outre une connexion 16 au réseau d'alimentation électrique. Cette connexion présente deux bornes de connexion 17, 18.

La connexion est formée par exemple d'un pantographe formant la borne positive 17 permettant de recueillir l'énergie électrique depuis une caténaire. L'autre borne 18 est alors formée par les roues du véhicule en contact avec les rails. En variante, l'une des bornes est formée par un patin disposé sous le véhicule frottant sur un rail d'alimentation.

Dans l'exemple considéré, le réseau d'alimentation fournit un courant continu par exemple sous 750 volts.

Les moteurs 12A, 12B sont reliés à la connexion 16 par une chaine de traction 20.

En outre, le véhicule ferroviaire comporte une batterie 22 de stockage de l'énergie électrique propre à l'alimentation des moteurs 12A, 12B notamment lorsque le véhicule n'est pas alimenté depuis l'entrée 16. Cette batterie 22 est connectée à la chaine de traction 20 entre une borne de connexion 24 et la masse.

La chaine de traction 20 comporte deux branches identiques 32A, 32B propres à alimenter respectivement le moteur 12A et le moteur 12B. Ces deux branches sont reliées en parallèle à la connexion 16.

Pour des raisons de simplicité, seule la branche 32A d'alimentation sera décrite en détail. Les éléments identiques entre les branches 32A et 32B sont désignés avec les mêmes numéros de référence suivis de A pour la branche 32A et B pour la branche 32B.

La branche 32A comporte, en entrée, un capteur de tension 40A placé entre les deux bornes d'entrée 17, 18. Sur l'une des entrées est prévu un interrupteur de déconnexion 42A, permettant d'isoler la branche de la chaine de traction du réseau d'alimentation électrique. En aval de l'interrupteur 42A, sont disposés successivement un capteur d'intensité 44A suivi d'une inductance d'entrée 46A par exemple de 8 mH.

Chaque branche de la chaine de traction comporte un hacheur 50A, qui est un hacheur élévateur et/ou un hacheur abaisseur, et un convertisseur de traction 52A reliés l'un à l'autre par un bus de courant continu 54A. L'un des rails du bus de courant continu 54A est relié à la borne 18 de la connexion au réseau d'alimentation et forme la masse. L'autre rail forme un rail positif.

Le hacheur 50A et le convertisseur de traction 52A comportent des organes de commutation reliés chacun à une unité de commande 56 à laquelle sont reliés également les capteurs de courant et de tension présents dans l'installation afin d'assurer la commande du hacheur 50A et du convertisseur de traction 52A. Les connexions ne sont pas représentées sur la figure 1 par souci de clarté.

Le hacheur 50A et le convertisseur de traction 52A sont tous deux réversibles de sorte qu'ils sont susceptibles de mettre en forme un courant reçu depuis leur entrée ou depuis leur sortie.

Toutefois, de manière conventionnelle et pour faciliter la compréhension, le hacheur et le convertisseur de tension sont supposés avoir leurs entrées connectées pour recevoir l'énergie venant du réseau d'alimentation et leurs sorties destinées à alimenter le moteur électrique.

Le hacheur 50A comporte deux interrupteurs commandés montés en série, le point milieu noté 57A formant l'entrée du hacheur. Les deux extrémités de la branche formée des deux interrupteurs commandés sont reliées aux barres du bus de courant continu 54A. Elles forment les sorties 58A1 et 58A2 du hacheur.

Le convertisseur de traction 52A est propre à fournir un courant triphasé pour le moteur électrique triphasé 12A. À cet effet, il comporte trois branches identiques comme connu en soi. Chaque branche comporte deux interrupteurs commandés montés en série entre les deux barres du bus 54A depuis une entrée 60A, 61A, le point milieu de chaque branche entre les interrupteurs commandés formant une borne de la sortie triphasée 62A à laquelle est relié le moteur 12A.

Le bus 54A comporte, entre ses deux rails, un condensateur 66A de régulation de tension et un capteur de tension 68A reliés à l'unité de commande 56.

Chaque branche 32A, 32B de la chaine de traction comporte en outre une branche 70A, 70B de connexion de la batterie 22 au travers de la même borne 24.

La branche de connexion 70A est reliée au rail positif du bus d'alimentation 54A et comporte une inductance de découplage 72A de l'ordre de 250 µH et un capteur d'intensité 74A relié à l'unité de commande 56. Cette branche comporte en outre un interrupteur d'isolement 76A monté en parallèle avec une diode 78A elle-même reliée en série avec un interrupteur 80A.

Un capteur 82A de mesure de la tension aux bornes de la batterie 22 est monté entre la branche de connexion 70A et la masse. Ce capteur est relié à l'unité de commande 56.

Enfin, la chaine de traction comporte, pour chaque branche d'alimentation 32A, 32B, et donc pour chaque moteur 12A, 12B, un rhéostat 90A, 90B permettant la dissipation de l'énergie de freinage issue du convertisseur de traction en cas d'incapacité pour le réseau d'alimentation électrique et/ou la batterie 22 d'absorber cette énergie.

Un organe de commutation 92A assure la connexion sélective de l'entrée 57A du hacheur 50A à la borne d'entrée d'alimentation électrique 17 ou au rhéostat 90A.

L'organe de commutation 92A comporte deux commutateurs.

Un premier commutateur 94A assure la connexion sélective depuis la bobine 46A de la borne positive 17 de la connexion au réseau d'alimentation électrique, soit à l'entrée 57A du hacheur dans une première position A, soit au rail positif du bus 54A dans une seconde position B.

L'organe de commutation 92A comporte un second commutateur 96A assurant la connexion sélective de la borne d'alimentation du rhéostat 90A dans une première position A à l'entrée 57B du hacheur 50B de la seconde branche d'alimentation 32B et dans la seconde position B à l'entrée 57A du hacheur 50A de la branche d'alimentation 32A.

Pour permettre ces connexions, les sorties du commutateur 96A correspondant aux positions A et B sont reliées aux sorties respectives du commutateur 96B correspondant aux positions B et A.

Les deux commutateurs 94A, 96A sont reliés mécaniquement de sorte que ceux-ci sont simultanément dans la première position A ou dans la seconde position B.

Chacun des organes de commutation 92A, 92B est relié à l'unité de commande 56.

Lorsque le véhicule est relié au réseau électrique par la connexion 16, les organes de commutation 92A, 92B sont dans des positions opposées.

Dans la suite de la description, on suppose que l'organe de commutation 92A est en position A, non représentée sur la figure 1, et l'organe de commutation 92B en position B.

Les interrupteurs 42A, 42B, et l'interrupteur 76A sont alors fermés, l'interrupteur 76B étant ouvert.

Dans la pratique, afin d'assurer un échauffement et un vieillissement égalitairement répartis entre les deux branches d'alimentation, l'état des organes de commutation 92A, 92B d'une part et les interrupteurs 76A, 76B d'autre part sont régulièrement simultanément inversés.

Dans cette configuration où le véhicule est connecté au réseau d'alimentation, lors de phases de traction, et suivant l'intensité nécessaire pour l'alimentation des moteurs, l'énergie du réseau est appliquée vers les deux moteurs 12A, 12B et éventuellement vers la batterie 22 pour son rechargement mais seulement depuis la branche d'alimentation 32A.

Si l'intensité pouvant être fournie par le réseau est supérieure à l'intensité nécessaire pour l'alimentation des moteurs, et si le niveau de charge de la batterie est insuffisant, alors le hacheur 50A est utilisé pour recharger la batterie 22. A cet effet, et comme connu en soi, la tension au borne de la batterie est modifiée par commande du hacheur 50A.

Les convertisseurs de traction sont utilisés pour alimenter les moteurs 12A et 12B à partir des bus 54A, 54B alimentés en courant continu respectivement par le hacheur 50A et directement par le réseau depuis la connexion 16.

Lors des phases de freinage, l'énergie produite par le moteur 12A est dirigée soit vers le réseau depuis la connexion 16 au travers du hacheur 50A, soit vers la batterie 22 directement depuis le bus 54A.

Pour le moteur 12B, l'énergie produite est dirigée seulement soit vers le réseau d'alimentation par la connexion 16 directement depuis le bus d'alimentation 54B, soit vers les rhéostats 90A, 90B au travers du hacheur 50B.

Pour le moteur 12A, l'énergie est échangée avec le réseau depuis la connexion 16 ou avec la batterie 22 en appliquant la stratégie suivante qui vise à maintenir la batterie chargée avec toutefois une capacité résiduelle suffisante pour absorber l'énergie de freinage résiduelle des freinages ultérieurs.

À cet effet, l'unité de commande 56 est propre à assurer le pilotage des hacheurs 50A, 50B, des convertisseurs de traction 52A, 52B et la commande des différents organes de commutation 92A, 92B de sorte que la batterie 22 ne soit jamais totalement chargée afin de permettre que l'énergie récupérée lors d'un freinage depuis le moteur 12A ou 12B puisse toujours être absorbée par la batterie 22, si l'énergie ne peut être évacuée par la connexion 16, sans recourir aux rhéostats 90A, 90B.

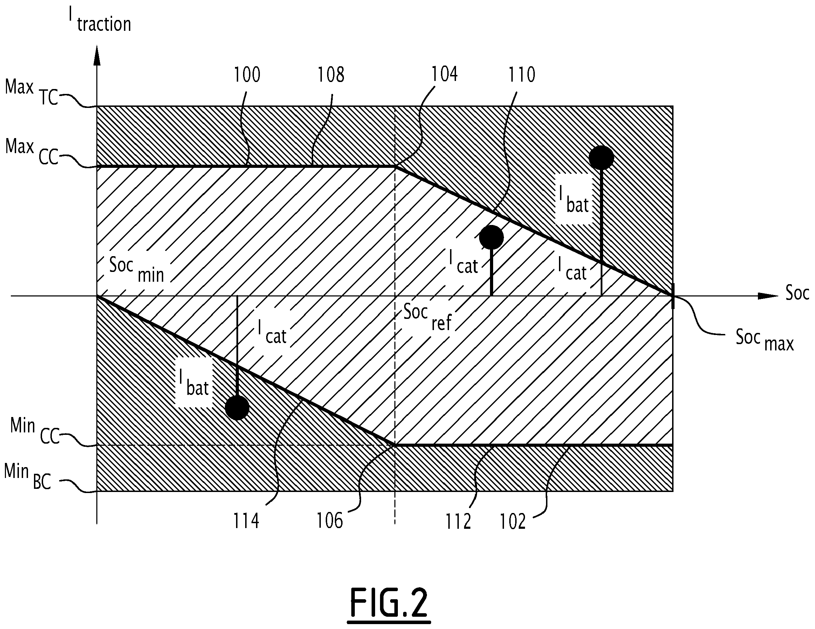

À cet effet, l'unité de pilotage applique, lorsque le véhicule est connecté au réseau électrique par la connexion 16, une stratégie telle qu'illustré sur la figure 2 privilégiant le transfert de l'énergie depuis ou vers le moteur électrique 12A et depuis ou vers soit la connexion 16 au réseau d'alimentation électrique, soit la batterie 22.

À cet effet, l'unité de commande 56 est propre, lors des phases de traction, à piloter le hacheur 50A pour fournir l'intensité nécessaire à l'alimentation du moteur 12A sur le bus 54A prioritairement depuis la connexion 16 au réseau d'alimentation électrique jusqu'à une valeur d'intensité maximale de traction variable dépendant de l'état de charge de la batterie noté SoC et seulement pour la partie complémentaire depuis la batterie 22.

La valeur de l'intensité maximale de traction variable fournie par le réseau au moteur dont la courbe représentative est désignée par la référence 100 sur la figure 2 est une fonction décroissante de l'état de charge SoC de la batterie, puis nulle au-delà d'une valeur de charge maximale SoCₘₐₓ de la batterie.

Au contraire, l'unité de commande 56 est propre, lors des phases de freinage, à piloter le hacheur 50A pour fournir l'intensité issue du moteur 12A sur le bus 54A prioritairement vers la connexion 16 au réseau d'alimentation électrique jusqu'à une valeur d'intensité minimale de freinage variable dépendant de l'état de charge de la batterie SoC et seulement pour la partie complémentaire vers la batterie 22.

La valeur de l'intensité minimale de freinage variable dont la courbe représentative est désignée par la référence 102 sur la figure 2 est une fonction décroissante de l'état de charge SoC de la batterie, nulle en deçà d'une valeur de charge minimale SoCₘᵢₙ de la batterie.

Sur la figure 2 est représenté en abscisse l'état de charge de la batterie depuis la charge minimale SoCₘᵢₙ par exemple égale à 20% de la capacité maximale de la batterie et la charge maximale SoCₘₐₓ par exemple égale à 90% de la capacité maximale de la batterie.

En ordonnées est représentée l'intensité mise en oeuvre dans la chaine de traction 20. Cette intensité est positive lorsque les moteurs agissent en traction et consomment l'énergie électrique fournie par la batterie et le réseau d'alimentation et cette intensité est négative lorsque le véhicule freine et que les moteurs réinjectent de l'énergie électrique vers la batterie ou le réseau d'alimentation.

Que ce soit en traction ou en freinage, la chaine de traction 20 est conçue pour un transfert du courant électrique maximal ou minimal depuis ou vers le réseau d'alimentation. Cette valeur est notée Max_{CC} pour la traction et Min_{CC} pour le freinage.

De même, un courant maximal peut être consommé ou fourni par les moteurs électriques correspond à un courant maximum de traction ou un courant minimum de freinage notés respectivement Max_{TC} et Min_{BC}.

Sur cette figure sont représentées la courbe d'intensité maximale de traction variable prélevée sur le réseau désignée par la référence 100 et la courbe d'intensité minimale de freinage variable renvoyée au réseau d'alimentation électrique, cette courbe est notée par la référence 102.

Chacune de ces courbes présente un point d'inflexion 104 et 106 correspondant à un état de charge de référence de la batterie noté SoC_{ref}. Cet état de charge de référence SoC_{ref} est égal par exemple à 80% de la capacité maximale de charge de la batterie.

Lorsque le véhicule ferroviaire fonctionne en traction et que la charge de la batterie est inférieure à l'état de charge de référence SoC_{ref}, l'intensité maximale de traction reçue du réseau est égale au courant maximal de traction Max_{CC} de sorte que tant que le besoin en courant n'est pas supérieur à la valeur Max_{CC}, les moteurs sont alimentés seulement depuis le réseau d'alimentation électrique puis, si l'intensité nécessaire à la traction est comprise entre les valeurs Max_{TC} et Max_{CC}, l'intensité supplémentaire nécessaire au-delà de l'intensité Max_{CC} est fournie depuis la batterie 22. Le hacheur 50A est piloté en conséquence par l'unité de commande 56.

Ainsi, l'intensité maximale de traction variable est constante et prise égale à Max_{CC}, la courbe 100 présentant un palier noté 108.

À partir du point d'inflexion 104, et en phase de traction, le rôle de la batterie dans la fourniture d'énergie est d'autant plus important que l'état de charge de la batterie est grand. Ainsi, la courbe d'intensité maximale de traction variable décrit une droite 110 de coefficient directeur négatif reliant le point d'inflexion 104 à la valeur nulle lorsque l'état de charge est égal à l'état de charge maximal SoCₘₐₓ.

Ainsi, si l'intensité nécessaire pour le moteur est inférieure à la valeur maximale fournie par la courbe d'intensité maximale de traction variable 100, toute l'intensité est fournie par le réseau. Si cette intensité nécessaire dépasse la valeur maximale, alors le surplus d'intensité au-delà de la valeur maximale est fournie par la batterie 22, le réseau ne fournissant que la valeur maximale d'intensité.

Au contraire, lorsque le véhicule est en phase de freinage, tant que l'état de charge de la batterie est supérieur à l'état de charge de référence SoC_{ref}, le courant fourni par le moteur est réinjecté jusqu'à la valeur Min_{CC} dans le réseau d'alimentation et seul le courant compris entre Min_{CC} et Minée est injecté dans la batterie afin d'éviter une recharge trop rapide de celle-ci.

La courbe définissant l'intensité minimale de traction variable présente alors un palier 112.

En phase de freinage lorsque l'état de charge de la batterie 22 est inférieur à l'état de charge de référence SoC_{ref}, le courant réintroduit dans le réseau d'alimentation est d'autant plus faible en valeur absolue que la charge de la batterie est faible et en conséquence le courant utilisé pour la charge de la batterie d'autant plus élevé en valeur absolue que l'état de charge de la batterie est faible.

Ainsi, la courbe d'intensité minimale de freinage variable décrit une droite 114 de coefficient directeur négatif reliant la valeur nulle lorsque l'état de charge est égal à l'état de charge minimal SoCₘᵢₙ au point d'inflexion 106.

Si l'intensité reçue du moteur est inférieure à la valeur minimale fournie par la courbe d'intensité minimale de freinage variable 102, toute l'intensité est fournie au réseau. Si cette intensité produite par le moteur est inférieure à la valeur minimale, alors le surplus en valeur absolue d'intensité au-delà de la valeur minimale est adressée à la batterie, le réseau ne recevant que la valeur minimale d'intensité.

On comprend qu'avec une telle stratégie de charge de la batterie, celle-ci n'est prioritairement chargée que lorsque sa charge est inférieure à l'état de charge de référence SoC_{ref} de sorte qu'il reste suffisamment de capacité de stockage dans la batterie pour absorber les freinages ultérieurs du véhicule.

De même, lorsque le niveau de charge de la batterie est supérieur à l'état de charge de référence SoC_{ref}, lors des phases de traction, l'énergie de la batterie est prioritairement utilisée pour alimenter le moteur, permettant de maintenir le niveau de charge de la batterie autour de l'état de charge de référence SoC_{ref}, lequel permet à tout moment l'absorption de l'énergie de freinage en cas de freinage du véhicule.

Lorsque le véhicule n'est pas alimenté depuis le réseau au travers de la connexion 16 ou plus généralement lorsque les conditions d'injection ou de prélèvement sur le réseau d'alimentation ne sont pas remplies, les organes de commutation 92A, 92B des deux branches d'alimentation 32A, 32B sont en position B. Les deux interrupteurs 76A, 76B sont en position fermée permettant le transfert d'énergie entre les deux moteurs et la batterie 22.

Lors de la traction, les deux moteurs sont alimentés depuis la batterie 22, au travers des deux convertisseurs de traction 52A, 52B alimentés depuis les bus d'alimentation 54A, 54B reliés directement à la batterie 22. Les hacheurs 50A, 50B sont inactifs.

Lors du freinage, l'énergie des moteurs est envoyée prioritairement vers la batterie 22 et seulement si la charge de batterie dépasse une valeur de seuil prédéterminée égale à SoC_{ref} vers les rhéostats 90A, 90B.

Cette direction de l'énergie issue des moteurs se fait par la commande sous l'action de l'unité de commande 56 des hacheurs dont l'entrée 57A, 57B est reliée chacune à un rhéostat 90A, 90B respectivement.

On conçoit que dans un tel agencement, pour chaque chaîne de traction, un même hacheur est utilisé pour le rechargement de la batterie et pour les échanges entre le moteur et le réseau d'alimentation électrique, ce qui permet de réduire le poids et la complexité du véhicule.

## Revendications

1. Véhicule ferroviaire comportant :
- une connexion (16) à un réseau d'alimentation électrique continu,
- un hacheur (50A, 50B) connectable depuis une entrée (57A, 57B) à la connexion (16) au réseau d'alimentation électrique,
- une batterie (22) de stockage d'énergie électrique reliée pour son rechargement à une sortie (58A1, 58A2, 58B1, 58B2) du hacheur (50A, 50B) au travers d'un bus de courant continu (54A, 54B),
- une chaîne de traction (20) comportant :
- un convertisseur de traction (52A, 52B) relié à la connexion (16) au réseau d'alimentation électrique,
- un moteur électrique (12A, 12B) relié en sortie du convertisseur de traction (52A, 52B) pour son alimentation, et
- une unité de commande (56) du hacheur (50A, 50B) et du convertisseur de traction (52A, 52B),
**caractérisé en ce que**
- le convertisseur de traction (52A, 52B) est connecté au bus de courant continu (54A, 54B) en sortie du hacheur (50A, 50B) pour son alimentation au travers du hacheur (50A, 50B) depuis la connexion (16) au réseau d'alimentation électrique et/ou depuis la batterie (22) de stockage d'énergie électrique, et
- l'unité de commande (56) est propre à piloter le même hacheur (50A, 50B) pour l'alimentation de la batterie (22) et l'alimentation du moteur électrique (12A, 12B) depuis la connexion (16) au réseau d'alimentation électrique.

2. Véhicule ferroviaire selon la revendication 1, **caractérisé en ce que** l'unité de commande (56) est propre à piloter le convertisseur de traction (52A, 52B) pour un échange d'énergie entre le moteur électrique (12A, 12B) et la batterie (22) au travers du bus de courant continu (54A, 54B).

3. Véhicule ferroviaire selon la revendication 2, **caractérisé en ce qu'**il comporte un rhéostat (90A, 90B) relié à l'entrée du hacheur (50A, 50B) et l'unité de commande (56) est propre à, lors des phases de freinage, piloter le hacheur (50A, 50B) pour débiter depuis son entrée, vers le rhéostat (90A, 90B), le courant issu du convertisseur de traction (52A, 52B) sur le bus de courant continu (54A, 54B) si les conditions de charge maximale de la batterie (22) sont atteints et les conditions d'injection sur le réseau d'alimentation électrique ne sont pas remplies.

4. Véhicule ferroviaire selon la revendication 3, **caractérisé en ce qu'**il comporte :
- deux chaînes de traction (20) comportant chacune :
- un hacheur (50A, 50B) connectable depuis une entrée (57A, 57B) à la connexion (16) au réseau d'alimentation électrique,
- un convertisseur de traction (52A, 52B) dont une entrée (60A, 61A, 60B, 61B) est reliée à une sortie (58A1, 58A2, 58B1, 58B2) du hacheur (50A, 50B) au travers d'un bus de courant continu (54A, 54B),
- un moteur électrique (12A, 12B) relié en sortie du convertisseur de traction (52A, 52B) pour son alimentation,
- un rhéostat (90A, 90B) pour chaque chaîne de traction,
et **en ce qu'**il comporte
des moyens (92A, 92B) de connexion sélective des deux rhéostats (90A, 90B) en parallèle à l'entrée d'un unique et même hacheur (50A, 50B) d'une des chaînes de traction ou de chaque rhéostat (90A, 90B) seul sur une entrée d'un unique hacheur (50A, 50B).

5. Véhicule ferroviaire selon la revendication 4, **caractérisé en ce qu'**il comporte des moyens de connexion sélective de la batterie (22) :
- au bus de courant continu (54A, 54B) du hacheur (50A, 50B) non connecté aux rhéostats (90A, 90B) lorsque les deux rhéostats (90A, 90B) sont connectés en parallèle à l'entrée d'un unique et même hacheur (50A, 50B), et
- aux bus de courant continu (54A, 54B) des deux hacheurs (50A, 50B) connectés aux rhéostats (90A, 90B) lorsque chaque rhéostat (90A, 90B) est connecté à une entrée d'un unique hacheur (50A, 50B).

6. Véhicule ferroviaire selon l'une quelconque des revendications précédentes, **caractérisé en ce que** l'unité de commande (56) est propre à, lors des phases de traction :
- piloter le convertisseur de traction (52A, 52B) pour l'alimentation du moteur électrique (12A, 12B) depuis le bus de courant continu (54A, 54B),
- piloter le hacheur (50A, 50B) pour répartir la fourniture d'énergie sur le bus de courant continu (54A, 54B) depuis la connexion (16) au réseau d'alimentation électrique et depuis la batterie (22) en fonction de critères de gestion d'énergie de traction prédéterminés.

7. Véhicule ferroviaire selon la revendication 6, **caractérisé en ce que** l'unité de commande (56) est propre, lors des phases de traction, à piloter le hacheur (50A, 50B) pour fournir l'intensité nécessaire à l'alimentation du moteur sur le bus de courant continu (54A, 54B) prioritairement depuis la connexion (16) au réseau d'alimentation électrique, jusqu'à une valeur d'intensité maximale de traction variable dépendant de l'état de charge (SoC) de la batterie (22) et complémentairement depuis la batterie (22), la valeur de l'intensité maximale de traction variable étant une fonction décroissante de l'état de charge (SoC) de la batterie (22), nulle au-delà d'une valeur de charge maximale (SoCₘₐₓ) de la batterie (22).

8. Véhicule ferroviaire selon la revendication 7, **caractérisé en ce que** la fonction décroissante est constante pour les valeurs de charge (SoC) de la batterie (22) inférieure à une valeur de charge de référence (SoC_{ref}) puis strictement décroissante entre la valeur de charge de référence (SoC_{ref}) et la valeur de charge maximale (SoCₘₐₓ).

9. Véhicule ferroviaire selon l'une quelconque des revendications précédentes, **caractérisé en ce que** :
- l'unité de commande (56) est propre à, lors des phases de freinage :
- piloter le convertisseur de traction (52A, 52B) pour débiter depuis son entrée sur le bus de courant continu (54A, 54B) l'énergie produite par le moteur de traction (12A, 12B),
- piloter le hacheur (50A, 50B) pour répartir l'énergie du bus de courant continu (54A, 54B) vers la connexion (16) au réseau d'alimentation électrique et vers la batterie (22) en fonction de critères de gestion d'énergie de freinage prédéterminés.

10. Véhicule ferroviaire selon la revendication 9, **caractérisé en ce que** l'unité de commande (56) est propre, lors des phases de freinage, à piloter le hacheur (50A, 50B) pour fournir l'intensité débitée sur le bus de courant continu (54A, 54B) depuis l'entrée du convertisseur de traction (52A, 52B) prioritairement vers la connexion (16) au réseau d'alimentation électrique jusqu'à une valeur d'intensité minimale de freinage variable dépendant de l'état de charge (SoC) de la batterie (22), et complémentairement, vers la batterie (22), la valeur de l'intensité minimale de freinage étant une fonction décroissante de l'état de charge de la batterie (22), nulle en deçà d'une valeur de charge minimale (SOCₘᵢₙ).

11. Véhicule ferroviaire selon la revendication 10, **caractérisé en ce que** la fonction décroissante est strictement décroissante jusqu'à une valeur de charge de référence (SoC_{ref}) et est constante pour les valeurs de charge (SoC) supérieures à la valeur de charge de référence (SoC_{ref}).
